# EUROPEAN PATENT APPLICATION

(11) **EP 0 654 783 A1**
(43) Date of publication of application: **24.05.1995**
(21) Application number: 94111245.0
(22) Date of filing: 19.07.1994
(51) Int. Cl.: G11B 5/66

(54) **Multilayered longitudinal magnetic recording media with improved overwrite**

(30) Priority: 22.11.1993 US 156591
(71) Applicant: Hewlett-Packard Company, Palo Alto, California 94304 (US)
(72) Inventor: Natarajan, Bangalore R., Cupertino, California 95014 (US); Murdock, Edward S., Edina, Minnesota 55424 (US); Walmsley, Robert G., Palo Alto, California 94306 (US)
(74) Representative: Schoppe, Fritz, Dipl.-Ing.

(57) **Abstract**

A multilayered thin film longitudinal recording medium is produced by applying two or more magnetic layers (12, 13) to a supporting substrate (10), the magnetic properties of the individual magnetic layers (12, 13) being independently controlled to impart improved overwrite properties to the medium. The resulting medium might include magnetic layers which have different thicknesses, or are produced from different alloy compositions, or are the products of different process parameters. Boundary separation layers (15) might or might not be included between adjacent magnetic layers (12, 13).

## Description

### FIELD OF THE INVENTION

This invention relates generally to a multilayered thin film longitudinal recording medium. It pertains more particularly to a multilayered medium which exhibits improved overwrite properties, in comparison to the overwrite properties of a similar medium having only one magnetic layer, when used with a selected recording head.

### BACKGROUND OF THE INVENTION

Digital information is recorded in magnetic recording disks along circular strips or tracks along which the magnetization vector of the magnetic layer of the disk alternates between clockwise and counterclockwise in a pattern which encodes the data. One of the problems in magnetic recording is to fabricate media having adequate overwrite properties. The term "overwrite" refers to the capacity of the media to have substantially all vestiges of old data erased when new data is recorded on top of the old data.

A recognized overwrite phenomenon occurs in which the pattern of old data affects the final recorded pattern of new data and leads to an interference signal in the new data. It has now been fairly well established that in the case of thin film media this interference signal is not caused by incomplete erasure of old lower frequency data recorded in the deep layers of the medium when overwritten by higher frequency data even though the higher frequency head fields do not penetrate as deeply into a thick recording medium as do the lower frequency head fields. Rather, the modulation of new data by pre-existing data is caused by the demagnetizing field of a transient transition at the leading edge of the gap or "write bubble".

This transient transition is present or not depending on the relative directions of the head field and the medium magnetization under the gap. It results in what are called "hard" and "easy" transitions being written at the trailing part of the gap. It is worse when the demagnetizing fields in the medium are greater or when the recording bubble is smaller.

Pre-existing data will determine the frequency and pattern of hard and easy transitions. Hard transitions are shifted in position from their intended positions, and may also be wider than easy transitions. They therefore reduce the error margin in a disk drive product.

In the search for ways to reduce medium noise it was previously discovered that fabrication of media in the form of multiple magnetic layers of magnetic material separated by thin non-magnetic layers dramatically reduced the medium noise. However, this structure also resulted in worse overwrite. Our observation was that the worsening of overwrite depended on the thickness and number of separation layers. Reduction of overwrite capabilities could be minimized by keeping the separation layers thin (<100 Angstroms). However, overwrite was always reduced somewhat, which was not an optimum situation.

In the present invention this disadvantage of multilayered recording media is eliminated. Moreover, this invention can also provide improved overwrite performance when compared to that of conventional single-layered media of similar gradient of coercivity (H_{c}) and magnetization-thickness product (Mᵣt). This is accomplished by fabricating the several magnetic layers independently of one another to optimize the ability of the recording head to overwrite old data without leaving a residual pattern of the old data.

### SUMMARY OF THE INVENTION

The thin film longitudinal magnetic recording medium having improved overwrite, produced according to this disclosure, comprises a substrate having a plurality of magnetic layers disposed upon it. When used with a selected type of recording head, each magnetic layer has different magnetic properties selected to impart improved overwrite characteristics to the medium in comparison to the overwrite characteristics of a similar single layer medium.

The different magnetic properties of the individual magnetic layers can be imparted by varying the thickness of each magnetic layer, using differing alloy compositions within them, or by forming them by use of differing process parameters.

A non-magnetic isolation layer may or may not be interposed between adjacent magnetic layers.

The method for producing the medium involves formation of a substrate and deposition of a plurality of magnetic layers on the substrate while independently controlling their magnetic properties to produce the previously-described product.

### DESCRIPTION OF THE DRAWINGS

Preferred embodiments of the invention are described below with reference to the following accompanying drawing depicting an example embodying the best mode for practicing the invention.

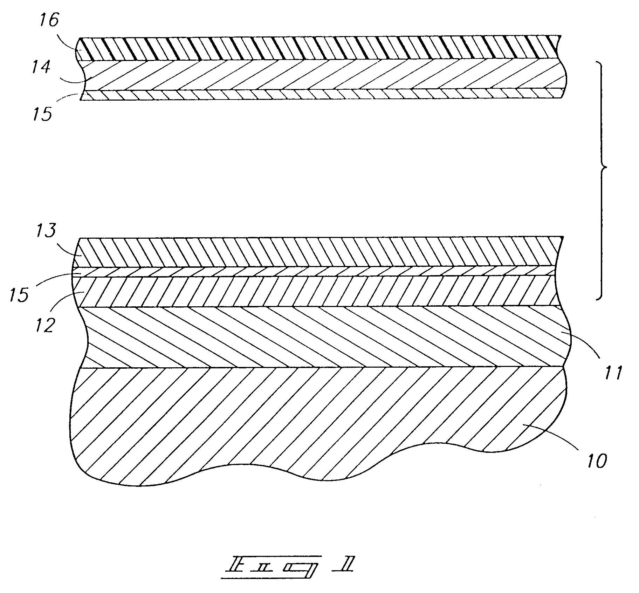

The drawing is a schematic fragmentary cross-sectional view through a multilayered recording medium according to the present disclosure.

### DETAILED DESCRIPTION OF THE INVENTION

Referring to the drawing, a thin film longitudinal magnetic recording medium having improved overwrite characteristics is schematically illustrated. The film structure is effective for recording media fabricated on any type of substrate material (e.g., metallic, glass, silicon, ceramic, plastic, polyimide, etc.), whether flexible or rigid.

Specifically, this invention consists of dividing the single magnetic layer of conventional thin film media into two or more layers which might be separated by non-magnetic boundary layers and tailoring the magnetic properties (i.e., coercivity, magnetization-thickness product and squareness) of the individual magnetic layers to improve the overwrite properties and recorded transition sharpness of the medium.

The key to this invention is that by dividing the recording layer into several independent layers the magnetic properties of the individual layers can be selected so that the resulting composite matches the magnetic properties of the recording heads to be used on that medium, as well as to control the demagnetizing effects within the medium. The result is a medium with significantly improved "writability" - the capacity of the recording medium to have old data overwritten by new data with little or no vestige of the old data remaining in the new data pattern.

The illustrated medium shown in the drawing comprises a substrate 10 having an optional underlayer 11 formed on its surface. A plurality of magnetic recording layers 12, 13 and 14 are illustrated in respective adjacent positions disposed upon the underlayer 11. The magnetic layers 12, 13 and 14 are separated by interposed non-magnetic boundary separation layers 15, which can be omitted when desired. A conventional protective overcoat 16 covers the outer exposed magnetic layer.

The number of magnetic layers in the medium might comprise as few as two, or might comprise a relatively large number of layers, on the order of five to ten. The illustrated break in the drawing is intended to indicate that the medium might include additional layers beyond those specifically illustrated. An appropriate number of interposed boundary separation layers 15 will be included when desired.

This invention is not dependent on the actual materials used for the substrate, the underlayer, the magnetic layers, or the (optional) non-magnetic boundary separation layer(s). Moreover, the individual magnetic layers may be different alloys or the same alloy processed in different ways.

Substrate 10 can be rigid or flexible. Its material composition can be glass, metal, polyimide, plastic, silicon, or ceramic, or other suitable base materials. The underlayer 11 typically is made of a metal material, such as chromium or the like. The magnetic recording layers 12, 13 and 14 are usually comprised of a material such as cobalt, or a cobalt alloy, such as chromium/cobalt/platinum alloy or the like. The boundary separation layers 15 are typically comprised of a metallic material such as chromium, a non-metallic material, such as carbon or an oxide, such as cobalt oxide. The protective layer 16 is typically comprised of a material such as zirconium oxide, or carbon, or the like.

Substrate 10 typically has a thickness in the range of from 0.7-1.9 millimeters. It must have a thickness sufficient to provide a rigid foundation for the recording medium. Underlayer 11 will normally have a thickness in the range of from 2000-5000 Angstroms, preferably about 1500 Angstroms thick. The recording layers 12, 13 and 14 will each have a thickness of about 200-500 Angstroms.

The thickness of the boundary separation layers 13, when present, should be less than 100 Angstroms, and should preferably be as thin as possible. This requirement is subject to the constraint that boundary separation layers 13 should be physically continuous and sufficiently thick to decouple the magnetic layers 12. In practice, the boundary separation layers 13 may be as thin as 5-10 Angstroms.

The data provided by structures made in accordance with the present invention indicate that recording overwrite properties of recording media are sensitive to the thickness of the boundary separation layers 15. Specifically, if the thickness of the boundary separation layers 15 exceeds approximately 100 Angstroms, overwrite is significantly worsened, even for only two magnetic layers. If overwrite deteriorates too much, then the multilayer recording medium 10 will be unusable in practice, despite having other improved properties, such as reduction of noise.

The key features of the boundary separation layer are:
(1) that it be non-magnetic (i.e., neither ferromagnetic nor ferrimagnetic);
(2) that it be sufficiently thin (less than about 100 Angstroms and preferably about 15 Angstroms thick) to not significantly reduce the overwrite properties of the medium due to increased thickness;
(3) that it be substantially physically continuous in order to eliminate the exchange coupling between successive magnetic layers (so that the layers are truly independent); and
(4) that its properties be such that the recording performance of the overlying magnetic recording layers is not degraded by the presence of the boundary separation layer.

Fabrication of the multilayered recording film with non-magnetic boundary separation layer or layers must, of course, also be compatible with the overall manufacturing process for the thin film recording medium. This invention is compatible with manufacturing by sputter deposition. However, the invention can also be applied to other media manufacturing techniques, such as evaporation, plating, or ion beam deposition.

The key features of the improved medium consist of:
(1) the use of two or more multiple magnetic layers, each magnetic layer having magnetic properties (i.e., coercivity and magnetization-thickness product) different from those of the other magnetic layer or layers;
(2) the adjacent magnetic layers are either separated by thin non-magnetic films or are deposited directly on one another with no boundary separation layer (i.e., non-magnetic separation layer thickness is equal to zero);
(3) the properties of each magnetic layer are chosen so as to optimize the overwrite characteristics of the medium when used with a selected type of recording head;
(4) the non-magnetic boundary separation layer or layers, when used, can consist of any non-magnetic material that permits successive magnetic layers to be produced with independent magnetic properties without degrading the resulting recording properties of the medium;
(5) each non-magnetic boundary separation layer, when used, is preferably less than 100 Angstroms thick (preferably near 25 Angstroms) and substantially eliminates exchange coupling between adjacent magnetic layers, thus insuring the formation of independent layers (complete exchange coupling elimination is probably not required to realize measurable improvement in overwrite characteristics);
(6) the magnetic properties of the individual magnetic layers are controlled by selection of layer thickness, alloy composition, boundary separation layer thickness, deposition temperature, substrate bias, deposition pressure, gas composition, deposition power or rate, or by a combination of such items;
(7) the various layers comprising the recording medium can be applied to a substrate by sputtering, plating or evaporation (sputtering being preferable);
(8) the composition of the magnetic layers can be any metal alloy suitable for longitudinal magnetic recording, typically a binary, ternary or quaternary alloy of cobalt, or a binary, ternary or quaternary alloy of iron; and
(9) the layered structure of the medium can be applied to any substrate material which is suitable for longitudinal magnetic recording, including metal, glass, silicon, polyimide, or ceramic.

The magnetic properties of the layers of the medium (H_{c} and Mᵣt) are controlled in such a way as to match them to the volume head field that extends through the medium (in order to make writing sharper) and to reduce the demagnetizing effects of the old data pattern. In general, this means creating a gradient of coercivity (H_{c}) and magnetization-thickness product (Mᵣt) through the depth of the medium. For instance, the chosen gradient might require making the magnetic films lower in the medium (i.e., closer to the substrate and consequently farther from the head) with lower H_{c} but the same Mᵣt in each layer. However, there may be cases where a different gradient of H_{c} and Mᵣt will provide improved results. The idea of this invention is to control such properties of the layers of the medium in order to optimize the overwrite property.

In terms of processing, the magnetic properties of the several layers can be independently controlled by a number of methods. One is to vary the thickness of the layers, which changes both H_{c} and Mᵣt. Another is to use a different alloy composition for each layer. Another is to vary the deposition temperature of the layers. Other methods include changing the deposition power or argon gas pressure for the different magnetic layers. In our experiments we have directly used layer thickness and alloy composition as variables to control the properties of the layers.

The results of overwrite measurements, summarized in Table 1, show that varying the layer thickness or film composition of each layer to provide different magnetic properties improves the overwrite property of the multilayer structure disks. For example, comparing results from a single magnetic layer in run A-1 to two magnetic layers in run A-3, overwrite was increased by 1.5 dB when using the multilayer films. Also, comparing results from runs A-2 and A-5 shows that the order sequence of layers having different magnetic properties is important for enhancing overwrite. Hence, tailoring the magnetic properties of individual layers to provide a specific and known H_{c} and Mᵣt gradient can improve overall recording performance of multilayer disks (especially, increasing overwrite in addition to lowering medium noise by multilayering magnetic films).

In runs numbered B-1 through B-3, three disks of pure cobalt over chromium were fabricated. The magnetic properties of pure Co over Cr are more sensitive to variations of Co and Cr film thicknesses than is observed for CoCrPt over Cr. Thus, multilayered Co disks should have a larger gradient in magnetic properties than CoCrPt disks. As seen in Table 1, a significant improvement in overwrite was measured for multilayered disks compared to a single layer Co disk. Due to the properties of Co, the multilayered Co disks probably have the highest H_{c} and lowest Mᵣt (lower demagnetization factor) in their top layers.

Runs C-1 and C-2 show recording results of two-layered discs with different magnetic alloy films for each layer. The magnetic properties (H_{c} and Mᵣt) of the two films are very different from each other. For the layer thicknesses chosen, the Co10Cr4Pt gives lower H_{c} and higher Mᵣt and Co20Cr9Pt provides higher H_{c} and lower Mᵣt.

The results shown in Table 1 indicate that multilayer disks fabricated with a 500 angstrom film of Co10Cr4Pt alloy on top of a 500 Angstrom film of Co20Cr9Pt alloy gave much higher overwrite than those discs having a 500 Angstrom film of Co20Cr9Pt alloy on top of a 500 angstrom film of Co10Cr4Pt alloy. This is the opposite gradient effect than that observed in Co multilayer disks. However, the head used for recording may not have been able to write properly on a layer of 500 Angstrom Co20Cr9Pt alloy because of its very high coercivity. The mechanism for improvement of overwrite for this set of discs is not yet known. However, varying the magnetic properties of each layer does improve the recording performance (such as overwrite) of the resulting multilayer media. The results listed in Table 1 demonstrate that the gradient in magnetic properties must be experimentally optimized for each type of head, average flying height, etc.

**TABLE 1**

| Run # | Film Structure | Overwrite(dB) |
|---|---|---|
| A-1 | 3kA Cr/600A CoCrPt/Carbon (C) | 43.5 |
| A-2 | 3kA Cr/100A CoCrPt/50A Cr/500A CoCrPt/C | 44.5 |
| A-3 | 3kA Cr/200A CoCrPt/50A Cr/400A CoCrPt/C | 45.0 |
| A-4 | 3kA Cr/300A CoCrPt/50A Cr/300A CoCrPt/C | 43.0 |
| A-5 | 3kA Cr/500A CoCrPt/50A Cr/100A CoCrPt/C | 43.0 |
| B-1 | 2.5kA Cr/400A Co/Carbon (C) | 31.0 |
| B-2 | 2.5kA Cr/200A Co/100A Cr/200A Co/Cr/C | 34.5 |
| **B-3 | 2.5kA Cr/200A Co/X/100A Co/X/100A Co/Cr/C | 36.0 |
| C-1 | 3kA Cr/500A Co10Cr4Pt/50A Cr/500A Co20Cr9Pt/C | 35.3 |
| C-2 | 3kA Cr/500A Co20Cr9Pt/50A Cr/500A Co10Cr4Pt/C | 40.0 |
| Note: MIG head was used for recording tests | | |

| | | |
|---|---|---|
| ** X = 100 Angstrom Cr boundary separation layer | | |

In summary, for all Co alloys used, the overwrite property of multilayered disks improved by having different magnetic properties for each magnetic layer. The advantages of this improvement are:
(1) the overwrite performance of longitudinal thin film recording media is improved relative to the performance of conventional multilayered media of otherwise similar recording properties;
(2) the overwrite performance of longitudinal thin film recording media is the same or improved relative to the performance of conventional single-layered media of otherwise similar recording properties;
(3) the technique of varying the magnetic properties of multiple magnetic layers can be used on any substrate material, whether rigid or flexible (such as glass, metal, polyimide, plastic, silicon, ceramic, etc.); and
(4) the technique can be easily applied to media manufactured by sputtering, plating or evaporation.

In compliance with the statute, the invention has been described in language more or less specific as to structural and methodical features. It is to be understood, however, that the invention is not limited to the specific features shown and described, since the means herein disclosed comprise preferred forms of putting the invention into effect. The invention is, therefore, claimed in any of its forms or modifications within the proper scope of the appended claims appropriately interpreted in accordance with the doctrine of equivalents.

## Claims

1. A thin film longitudinal magnetic recording medium having improved overwrite, comprising:
a substrate (10); and
a plurality of magnetic layers (12,13) disposed on the substrate;
the medium being characterized by:
each magnetic layer (12, 13) having different magnetic properties selected to impart improved overwrite characteristics to the medium, in comparison to the overwrite characteristics of a similar single layer medium, when the medium is used with a selected type of recording head.

2. The medium of claim 1 further characterized by the thicknesses of the magnetic layers being varied.

3. The medium of claim 1 further characterized by the alloy compositions of the magnetic layers (12, 13) being varied.

4. The medium of claim 1 further characterized by the magnetic layers (12, 13) being formed by use of differing process parameters.

5. The medium of claim 1, further characterized by adjacent magnetic layers (12, 13) being arranged directly on one another and with no boundary separation layer between them.

6. The medium of claim 1, further characterized by adjacent magnetic layers (12, 13) being separated by a thin non-magnetic boundary separation layer (15).

7. The medium of claim 1, further characterized by adjacent magnetic layers (12, 13) being separated by a continuous thin non-magnetic boundary separation layer (15) having a thickness of less than 100 Angstroms, the thickness of the boundary separation layer (15) being sufficient to substantially eliminate exchange coupling between the adjacent magnetic layers (12, 13).

8. The medium of claim 1, further characterized by the magnetic layers (12, 13) creating gradients of coercivity and magnetization-thickness product through the thickness of the medium.

9. A method for producing thin film longitudinal magnetic recording medium having improved overwrite, comprising the following steps:
forming a substrate (10); and
depositing a plurality of magnetic layers (12, 13) on the substrate (10);
the method being characterized by the following substep:
independently controlling the magnetic properties of the resulting individual magnetic layers (12, 13) to impart improved overwrite characteristics to the medium, in comparison to the overwrite characteristics of a similar single layer medium, when the medium is used with a selected type of recording head.

10. The method of claim 9, further characterized by the substep of interposing a thin non-magnetic boundary separation layer (15) between adjacent deposited magnetic layers (12, 13).
